# EUROPÄISCHE PATENTSCHRIFT

(11) **EP 1 362 194 B1**
(45) Veröffentlichungstag und Bekanntmachung des Hinweises auf die Patenterteilung: **20.10.2004**
(21) Anmeldenummer: 02710051.0
(22) Anmeldetag: 30.01.2002
(51) Int. Cl.: F16D 55/224

(54) **ELEKTROMECHANISCHE BREMSZUSPANNEINRICHTUNG**
ELECTRO MECHANICAL BRAKE TIGHTENING DEVICE
DISPOSITIF DE SERRAGE DE FREIN ELECTROMECANIQUE

(30) Priorität: 12.02.2001 DE 10106378
(43) Veröffentlichungstag der Anmeldung: 19.11.2003
(73) Patentinhaber: KNORR-BREMSE Systeme für Schienenfahrzeuge GmbH, 80809 München (DE)
(72) Erfinder: STALTMEIR, Josef, 80807 München (DE); WAGNER, Thomas, 81373 München (DE); FRIESEN, Ulf, 81739 München (DE)
(86) Internationale Anmeldenummer: PCT/EP2002/000930
(87) Internationale Veröffentlichungsnummer: WO 2002/064990

(56) Entgegenhaltungen:
- EP-A- 1 067 084
- DE-A- 4 024 811
- DE-U- 29 923 681
- US-A- 4 805 740

## Beschreibung

### Stand der Technik

Die Erfindung geht aus von einer elektromechanischen Bremszuspanneinrichtung, insbesondere für eine Schienenfahrzeugbremse, nach der Gattung des Patentanspruchs 1.

Im wesentlichen werden derzeit im Schienenfahrzeugbereich drei Bremssysteme eingesetzt : Elektropneumatische Bremssysteme, elektrohydraulische Bremssysteme sowie elektromechanische Bremssysteme. Das Bremssystem kann dabei als aktives oder passives Bremssystem ausgeführt sein, je nachdem ob die Kraft eines Bremsaktuators zum Einbremsen (aktives Bremssystem) oder zum Lösen der Bremse (passives Bremssystem) aufgebracht werden muß. Für den Fall von Betriebsstörungen erfolgt bei elektropneumatischen Systemen eine Energiespeicherung in Druckluftbehältern, bei elektrohydraulischen Systemen in Hydrobehältern und bei elektromechanischen Systemen in Form von Speicherfedern.

Aus der DE 199 45 701 A1 ist eine elektromechanische Bremszuspanneinrichtung für Schienenfahrzeuge mit einem Bremsaktuator bekannt, der eine Betriebsbremseinheit sowie eine Speicherbremseinheit mit einem Energiespeicher umfaßt. Die Betriebsbremseinheit beinhaltet einen Bremskrafterzeuger zum Zuspannen und/oder Lösen der Bremse, beispielsweise in Form eines elektromotorischen Antriebs. Die Speicherbremseinheit umfaßt mindestens einen Energiespeicher zum Speichern und Abgeben von Energie zum Zuspannen der Bremse als betriebliche Notbremse im Sinne einer unterlegten Sicherheitsebene bei Ausfall der Betriebsbremseinheit und/oder als Park- oder Feststellbremse. Die Speicherbremseinheit ist im allgemeinen als Federspeicherbremse ausgebildet.

Ein Kraftumsetzer sorgt für eine Umsetzung der vom Bremskrafterzeuger und/oder vom Energiespeicher abgegebenen Energie in eine Bremszuspannbewegung. Der elektromotorische Antrieb ist durch eine Regelungs- und Leistungselektronik zu schlupfgeregelten oder lastkorrigierten Bremsungen ansteuerbar. Für den Soll-Ist-Vergleich sind Werte für jeweils vorliegende Ist-Bremskraft notwendig, so daß Sensoren zur unmittelbaren Bremskraftmessung oder zur Messung von Größen vorgesehen werden müssen, aus denen die Ist-Bremskraft ableitbar ist.

Bei elektropneumatischen und elektrohydraulischen Bremssystemen werden im allgemeinen Drucksensoren zur Messung des in der Druckluft oder in der Hydraulikflüssigkeit vorhandenen Betriebsdrucks verwendet, aus dem dann die Höhe der momentanen Bremskraft ableitbar ist. Bei elektromechanischen Systemen sind solche Medien jedoch nicht vorhanden.

Die gattungsbildende US-A-4 805 740 beschreibt eine elektromechanische Bremszuspanneinrichtung mit einem Bremsaktuator zum Zuspannen und/oder Lösen der Bremse und mit einem Kraftumsetzer zur Umsetzung der vom Bremsaktuator abgegebenen Energie in eine Bremszuspannbewegung, wobei der Kraftumsetzer einen im Kraftfluß angeordneten, mit wenigstens einem Meßaufnehmer zur mittelbaren oder unmittelbaren Bremskraftmessung versehenen Scherkraftmeßbolzen beinhaltet. Der Meßaufnehmer wird durch zwei Dehnmeßstreifen gebildet, welche in einer Halbbrücke verschaltet sind, welche mit einer entfernt vom Scherkraftmeßbolzen angeordneten ergänzenden Halbbrücke, einem variablen Widerstand und einem Verstärker durch entsprechende Leitungen in Verbindung stehen. Wegen der Zuordnung der einzelnen Leitungen sind zum Anschließen der aus den Dehnmeßstreifen am Meßort bestehenden Halbbrücke an den Rest der Meßeinrichtung Fachkräfte notwendig. Außerdem erschwert die dezentrale Anordnung der Bauelemente eine einfache Montage bzw. einen schnellen Austausch der Meßeinrichtung in toto.

Der vorliegenden Erfindung liegt demgegenüber die Aufgabe zugrunde, eine elektromechanische Bremszuspanneinrichtung der eingangs erwähnten Art zu schaffen, bei welcher die Montage, der Austausch oder die Umrüstung der Meßeinrichtung vereinfacht ist.

Erfindungsgemäß wird diese Aufgabe durch die kennzeichnenden Merkmale von Anspruch 1 gelöst.

### Vorteile der Erfindung

Indem erfindungsgemäß die Auswerteelektronik im Bolzenkopf des Scherkraftmeßbolzens enthalten ist, bildet der Scherkraftmeßbolzen ein komplettes Meßmodul, welches der Bremskraftregelung Signale liefert, die proportional zur Ist-Bremskraft sind. Beispielsweise wird das von den Dehnmeßstreifen gelieferte Widerstandssignal ΔR durch die Auswerteelektronik in ein analoges Signal (-10 V bis +10V) oder ein digitales, zur Bremskraft proportionales Signal gewandelt. Damit kann der erfindungsgemäße Scherkraftmeßbolzen als in sich geschlossenes Meßmodul in den Regelkreis beliebiger Bremszuspanneinrichtungen integriert werden, was die Montage, den Austausch oder die Umrüstung stark vereinfacht. Insbesondere weist der Scherkraftmeßbolzen dann nur eine standardisierte Schnittstelle auf, welche auch von Nicht-Fackräften an eine Bremskraftregeleinrichtung angeschlossen werden kann.

Der mechatronische Scherkraftmeßbolzen vereinigt mit Kraftumsetzung und gleichzeitiger Kraftmessung zwei Funktionen in sich. Daher kann die erfindungsgemäße Bremszuspanneinrichtung zum einen klein bauen, zum anderen ergeben sich weniger Bauelemente und ein geringeres Gewicht. Indem der Kraftsensor direkt und unmittelbar in den Kraftfluß des Kraftumsetzers integriert ist, ergibt sich darüber hinaus eine hohe Meßgenauigkeit. Der Scherkraftmeßbolzen kann mechanisch hoch dauerfest ausgelegt werden, zur Gewährleistung einer sicheren Kraftübertragung.

Durch die in den Unteransprüchen aufgeführten Maßnahmen sind vorteilhafte Weiterbildungen und Verbesserungen der im Patentanspruch 1 angegebenen Bremszuspanneinrichtung möglich.

Gemäß einer besonders zu bevorzugenden Ausführungsform der Erfindung bildet der Scherkraftmeßbolzen einen Gelenkbolzen eines wenigstens zwei Kraftübertragungselemente des Kraftumsetzers miteinander verbindenden Gelenks. Das Gelenk lenkt einen vom Bremsaktuator linear betätigbaren Pleuel an einen Bremshebel einer auf Bremsbacken wirkenden Exzenteranordnung an. Hierdurch befindet sich die Kraftmeßstelle in unmittelbarer Nähe der Kraftwirkstelle, weshalb der Einfluß von Störgrößen wie beispielsweise Lagerreibung oder Hysterese gering ist, so daß dadurch sehr genaue Messungen möglich werden.

Eine bevorzugte Maßnahme sieht vor, daß der Meßaufnehmer zur Bremskraftmessung wenigstens einen am Umfang des Scherkraftmeßbolzens gehaltenen Dehnmeßstreifen beinhaltet. Dehnmeßstreifen haben bekanntermaßen eine hohe Meßgenauigkeit bei gleichzeitig breitem Meßbereich und sind unempfindlich gegenüber Temperatur-änderungen und Druckstößen, was vor allem bei der im Rahmen von Notbremsungen schlagartig eintretenden Krafteinwirkung von Vorteil ist. Darüber zeichnen sie sich durch eine gute Langzeitstabilität sowie hohe Korrosionsbeständigkeit aus.

Gemäß einer Weiterbildung sind redundante Meßaufnehmer und/oder redundante Sensorsignal-Auswerteelektroniken, insbesondere redundante Meßaufnehmer mit unterschiedlichen Meßprinzipien und/oder redundante Sensorsignal-Auswerteelektroniken unterschiedlichen Aufbaus und Art vorgesehen. Damit wird eine erhöhte Zuverlässigkeit der Meßanordnung erzielt, außerdem ist eine Plausibilitätsprüfung durch Vergleich der Meßsignale zweier oder mehrerer Meßkreise möglich.

### Zeichnungen

Ein Ausführungsbeispiel der Erfindung ist in den Zeichnungen dargestellt und in der nachfolgenden Beschreibung näher erläutert. Es zeigen :
Fig.1 eine Schnittdarstellung einer bevorzugten Ausführungsform eines erfindungsgemäßen Bremsaktuators mit einem integrierten Scherkraftmeßbolzen;
Fig.2 eine Schnittdarstellung des Scherkraftmeßbolzens von Fig.1 entlang der Linie II-II.

### Beschreibung des Ausführungsbeispiels

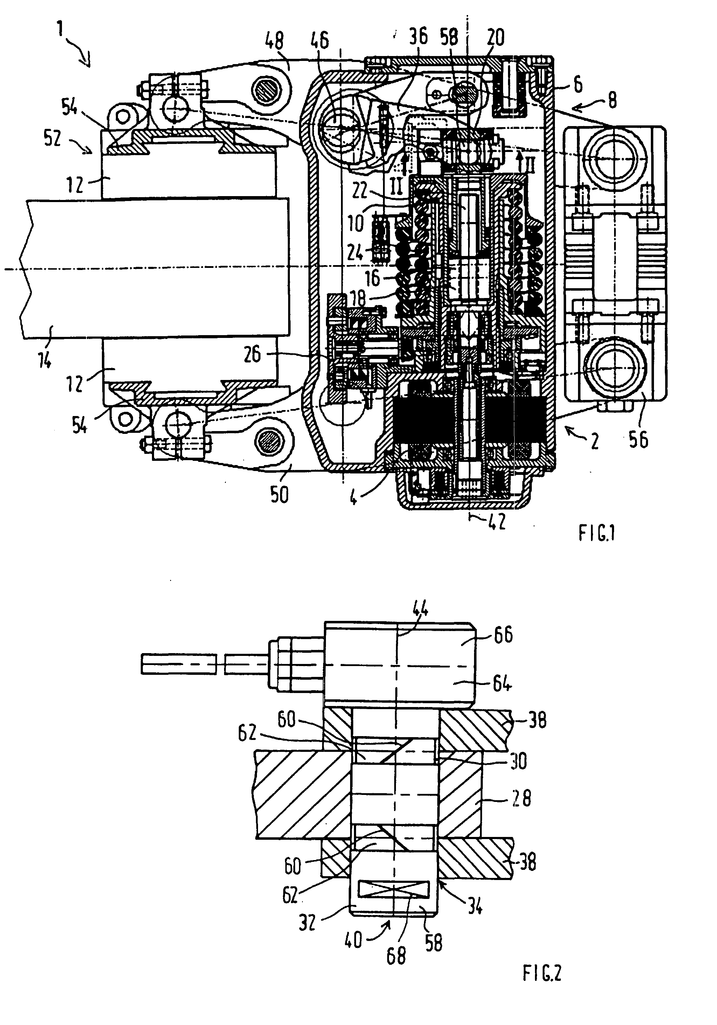

Die in Fig.1 insgesamt mit 1 bezeichnete, bevorzugte Ausführungsform einer elektromechanischen Bremszuspanneinrichtung ist für ein Schienenfahrzeug vorgesehen und beinhaltet einen Bremsaktuator 2 mit einer Betriebsbremseinheit und einer Speicherbremseinheit. Die Betriebsbremseinheit hat einen elektrischen Antrieb, beispielsweise einen elektrischen Stellmotor 4, der in einem Aktuatorgehäuse 6 des Bremsaktuators 2 untergebracht ist. Ein mechanischer Kraftumsetzer 8 dient zur Umsetzung der vom Bremsaktuator 2 abgegebenen Energie in eine Bremszuspannbewegung.

Der Stellmotor 4 versetzt eine koaxiale Bremsspindel 10 in Drehung, welche durch den Kraftumsetzer 8 in eine Bremszuspannbewegung von Bremsbelägen 12 in Richtung auf eine Bremsscheibe 14 gewandelt werden. Der Kraftumsetzer 8 umfaßt unter anderem eine Spindel/Mutter-Baueinheit 16 mit einer auf der Bremsspindel 10 drehbar gelagerten Spindelmutter 18, welche bei Drehung der Bremsspindel 10 Linearbewegungen in Richtung der Spindelachse ausführen kann. Das vom Stellmotor 4 abgewandte Ende der Bremsspindel 10 ragt in einen zylindrischen Hohlabschnitt eines Pleuels 20 hinein, der mit der Spindelmutter 18 axialfest verbunden ist. Außerdem ist der zylindrische Hohlabschnitt des Pleuels 20 in einer Schiebehülse 22 axialfest gehalten, gegen welche wenigstens eine sich am Aktuatorgehäuse 6 abstützende Speicherfeder 24 in Bremslösestellung vorgespannt ist. Die Speicherfeder 24 ist Teil der Speicherbremseinheit und dient als Energiespeicher zum Speichern und Abgeben von Energie zum Zuspannen der Bremse als betriebliche Notbremse im Sinne einer unterlegten Sicherheitsebene bei Ausfall der Betriebsbremseinheit und/oder als Park- oder Feststellbremse. Sowohl die Betriebs- als auch die Speicherbremseinheit wirken auf den Pleuel 20. Die Speicherfeder 24 ist durch eine Verriegelungseinrichtung 26 in der vorgespannten Stellung gehalten.

Ein plattenförmiger Pleuelkopf 28 des Pleuels 20 ragt aus der Schiebehülse 22 heraus und ist mit einem Pleuelauge 30 versehen. Wie insbeondere aus Fig.2 hervorgeht, durchragt ein Gelenkbolzen 32 das Pleuelauge 30 sowie hierzu koaxiale Durchgangsbohrungen 34 von das Pleuelauge 30 axial umgreifenden, an einem Ende eines Bremshebels 36 ausgebildeten Wangen 38. Die Wangen 38 des Bremshebels 36, der Pleuelkopf 28 und der Gelenkbolzen 32 bilden zusammen ein Gelenk 40 des Kraftumsetzers 8, wodurch der Bremshebel 36 am Pleuel 20 senkrecht zur Spindelachse 42 angelenkt ist. Bei Antrieb der Bremsspindel 10 in Bremszuspannrichtung bzw. bei Lösen der Verriegelungseinrichtung 26 der Speicherfeder 24 wird aufgrund des dann axial ausfahrenden Pleuels 20 der Gelenkbolzen 32 unter anderem durch im wesentlichen senkrecht zur Bolzenachse 44 angreifende Scherkräfte beansprucht.

Das andere Ende des Bremshebels 36 wirkt auf eine Exzenteranordnung mit einer Exzenterwelle 46, die an einen Zangenhebel 48 angelenkt ist, der zusammen mit einem weiteren Zangenhebel 50 eine Bremszange 52 bildet. An den einen Enden der Zangenhebel 48, 50 sind jeweils Belaghalter 54 mit Bremsbelägen 12 angeordnet, die in Richtung der Achse der Bremsscheibe 14 verschieblich sind. Die von den Bremsbelägen 12 abgewandt liegenden Enden der Zangenhebel 48, 50 sind miteinander über einen Druckstangensteller 56 verbunden, der vorzugsweise elektrisch betätigt ausgelegt ist. Die beschriebene Anordnung bildet ebenfalls einen Teil des Kraftumsetzers 8, der die vom Stellmotor 4 oder von der Speicherfeder 24 veranlaßten Ausfahrbewegungen des Pleuels 20 in eine Bremszuspannbewegung der Bremsbeläge 12 in Richtung auf die Bremsscheibe 14 wandelt.

Erfindungsgemäß wird der Gelenkbolzen 32 des Gelenks 40 durch einen Scherkraftmeßbolzen 58 gebildet. Der Scherkraftmeßbolzen ist mit wenigstens einem Meßaufnehmer 60 zur Messung von Größen versehen, aus welchen die an den Bremsbelägen 12 wirkende Bremskraft mittelbar oder unmittelbar ableitbar ist. In bevorzugter Ausführungsform wird der Meßaufnehmer durch Dehnmeßstreifen (DMS) 60 gebildet, welche beispielsweise in einer Ebene senkrecht zur Bolzenachse 44 umlaufenden Nuten 62 aufgenommen sind. Die Nuten 62 mit den Dehnmeßstreifen 60 befinden sich im Bereich der axialen Stoßstellen des Pleuelkopfes 28 mit den Wangen 38 des Bremshebels 36 und somit genau in den Scherebenen des auf Scherung beanspruchten Scherkraftmeßbolzens 58. Die Dehnmeßstreifen 60 sind am Umfang des Scherkraftmeßbolzens 58 vorzugsweise durch Klebung derart befestigt, daß sie den aufgrund der gegensinnig wirkenden Scherkräfte hervorgerufenen Scherverformungen des Scherkraftmeßbolzens 58 proportionale Signale erzeugen und diese an eine Auswerteelektronik 64 liefern.

Alternativ können die Nuten 62 entfallen und die Dehnmeßstreifen 60 auch direkt an der äußeren Mantelfläche des Scherkraftmeßbolzens 58 festgelegt sein. Gemäß einer weiteren Alternative oder zusätzlich können Dehnmeßstreifen 60 in einer zur Bolzenachse 44 koaxialen Hohlbohrung des Scherkraftmeßbolzens 58 gehalten sein, wobei dieser dann dünnwandig ausgeführt ist. Anstatt am Scherkraftmeßbolzen 58 oder zusätzlich hierzu können auch ein oder mehrere Dehnmeßstreifen 60 am Bremshebel 36 angeordnet sein, um aus den Verformungen des Bremshebels 36 die Bremskräfte ableiten zu können.

Darüber hinaus kann jegliche andere Art von Meßaufnehmer verwendet werden, mit welchen die im Betrieb auftretenden Verformungen des Scherkraftmeßbolzens 58 und/oder des Bremshebels 36 meßbar sind, so beispielsweise in den Scherkraftmeßbolzen 58 integrierte Druckmessumformer, die vorzugsweise nach kapazitivem, piezoelektrischem oder piezoresistivem Prinzip arbeiten. Um eine möglichst hohe Zuverlässigkeit der Meßanordnung zu erzielen, können die Meßaufnehmer 60 und/oder die Auswertelektronik 64 redundant vorgesehen sein. Insbesondere können auch redundante Meßaufnehmer mit unterschiedlichen Meßprinzipien und redundante Auswerteelektroniken unterschiedlichen Aufbaus und Art vorhanden sein.

Der Scherkraftmeßbolzen 58 hat einen endseitigen, im Durchmesser vergrößerten Bolzenkopf 66, in welchem eine Sensorsignal-Auswerteelektronik 64 untergebracht ist, vorzugsweise dadurch, daß sie in den Bolzenkopf 66 eingegossen ist, wodurch eine schwingsdämpfende oder schwingungsentkoppelte Aufnahme gegeben ist. Bei den vorzugsweise verwendeten Dehnmeßstreifen 60 beinhaltet die Auswertelektronik 64 eine DMS-Brückenschaltung. Im Montagezustand schlägt eine stirnseitig Ringfläche des Bolzenkopfes 66 axial auf der oberen Wange 38 des Bremshebels 36 an, das vom Bolzenkopf 66 weg weisende Ende des Scherkraftmeßbolzens 58 hat zwei quer zur Bolzenachse 44 verlaufende Außennuten 68 zur Aufnahme eines lagesichernden Sprengrings.

In der Auswertelektronik 64 findet außerdem eine Umrechnung der Scherverformungssignale in Signale für die jeweils an den Bremsbelägen 12 wirkende Ist-Bremskraft statt, welche an eine nicht dargestellte Steuerungs- und Regelungseinrichtung weitergeleitet werden, um anhand eines Soll-Ist-Vergleichs eine gewünschte Soll-Bremskraft einregeln zu können. Darüber hinaus dienen die empfangenen Signale für die Ist-Bremskräfte zur Überwachung der Krafteinsteuerung und Funktionsfähigkeit der Bremszuspanneinrichtung 1 bei sicherheitsrelevanten Bremsungen. Zur Verifizierung der Meßergebnisse kann außerdem der antriebsseitig durch einen Stromsensor gemessene Motorstrom mit dem Signal für die Ist-Bremskraft abgeglichen werden.

### Bezugszahlenliste

- 1: Bremszuspanneinrichtung
- 2: Bremsaktuator
- 4: Stellmotor
- 6: Aktuatorgehäuse
- 8: Kraftumsetzer
- 10: Bremsspindel
- 12: Bremsbelag
- 14: Bremsscheibe
- 16: Spindel-Mutter-Baueinheit
- 18: Spindelmutter
- 20: Pleuel
- 22: Schiebehülse
- 24: Speicherfeder
- 26: Verriegelungseinrichtung
- 28: Pleuelkopf
- 30: Pleuelauge
- 32: Gelenkbolzen
- 34: Durchgangsbohrungen
- 36: Bremshebel
- 38: Wangen
- 40: Gelenk
- 42: Spindelachse
- 44: Bolzenachse
- 46: Exzenterwelle
- 48: Zangenhebel
- 50: Zangenhebel
- 52: Bremszange
- 54: Belaghalter
- 56: Druckstangensteller
- 58: Scherkraftmeßbolzen
- 60: Meßaufnehmer (DMS)
- 62: Nuten
- 64: Auswerteelektronik
- 66: Bolzenkopf
- 68: Außennuten.

## Patentansprüche

1. Elektromechanische Bremszuspanneinrichtung (1), insbesondere für eine Schienenfahrzeugbremse, mit einem Bremsaktuator (2) zum Zuspannen und/oder Lösen der Bremse und mit einem Kraftumsetzer (8) zur Umsetzung der vom Bremsaktuator (2) abgegebenen Energie in eine Bremszuspannbewegung, wobei der Kraftumsetzer (8) einen im Kraftfluß angeordneten, mit . wenigstens einem Meßaufnehmer zur mittelbaren oder unmittelbaren Bremskraftmessung versehenen Scherkraftmeßbolzen (58) beinhaltet, **dadurch gekennzeichnet, daß** eine Meßaufnehmersignal-Auswerteelektronik (64) in einem endseitigen, im Durchmesser vergrößerten Bolzenkopf (66) des Scherkraftmeßbolzens (58) angeordnet ist.

2. Elektromechanische Bremszuspanneinrichtung nach Anspruch 1, **dadurch gekennzeichnet, daß** der Scherkraftmeßbolzen (58) einen Gelenkbolzen (32) eines wenigstens zwei Kraftübertragungselemente (20, 36) des Kraftumsetzers (8) miteinander verbindenden Gelenks (40) bildet.

3. Elektromechanische Bremszuspanneinrichtung nach Anspruch 2, **dadurch gekennzeichnet, daß** das Gelenk (40) einen vom Bremsaktuator (2) linear betätigbaren Pleuel (20) mit einem Bremshebel (36) einer auf Bremsbeläge (12) wirkenden Exzenteranordnung verbindet.

4. Elektromechanische Bremszuspanneinrichtung nach Anspruch 3, **dadurch gekennzeichnet, daß** der Scherkraftmeßbolzen (58) einen Pleuelkopf (28) des Pleuels (20) durchragt sowie hierzu koaxiale Durchgangsbohrungen (34) von den Pleuelkopf (28) axial umgreifenden Wangen (38) des Bremshebels (36).

5. Elektromechanische Bremszuspanneinrichtung nach Anspruch 4, **dadurch gekennzeichnet, daß** der Bremshebel (36) auf eine Exzenteranordnung mit einer Exzenterwelle (46) wirkt, die an wenigstens einen Zangenhebel (48) angelenkt ist, welcher zusammen mit einem weiteren Zangenhebel (50) eine Bremszange (52) bildet, wobei an den Enden der Zangenhebel (48, 50) Belaghalter mit Bremsbelägen (12) angeordnet sind, die in Richtung einer Achse einer Bremsscheibe (14) verschieblich sind.

6. Elektromechanische Bremszuspanneinrichtung nach einem der vorhergehenden Ansprüche, **dadurch gekennzeichnet, daß** der Meßaufnehmer zur mittelbaren oder unmittelbaren Bremskraftmessung wenigstens einen am Umfang des Scherkraftmeßbolzens (58) gehaltenen Dehnmeßstreifen (60) beinhaltet.

7. Elektromechanische Bremszuspanneinrichtung nach einem der vorhergehenden Ansprüche, **dadurch gekennzeichnet, daß** der Meßaufnehmer zur mittelbaren oder unmittelbaren Bremskraftmessung wenigstens einen in einer Hohlbohrung eines dünnwandigen Scherkraftmeßbolzens gehaltenen Dehnmeßstreifen (60) beinhaltet.

8. Elektromechanische Bremszuspanneinrichtung nach einem der vorhergehenden Ansprüche, **dadurch gekennzeichnet, daß** am Umfang des Scherkraftmeßbolzens (58) Ausnehmungen (62) zur Aufnahme der Dehnmeßstreifen (60) vorgesehen sind, welche sich im Bereich von axialen Stoßebenen des Pleuelkopfes (28) mit den Wangen (38) des Bremshebels (36) befinden.

9. Elektromechanische Bremszuspanneinrichtung nach einem der vorhergehenden Ansprüche, **dadurch gekennzeichnet, daß** der Meßaufnehmer (60) zur mittelbaren oder unmittelbaren Bremskraftmessung wenigstens einen im Scherkraftmeßbolzen (58) integrierten Druckmeßumformer beinhaltet, vorzugsweise einen nach kapazitzivem, piezoelektrischem oder piezoresistivem Prinzip arbeitenden Druckmeßumformer.

10. Elektromechanische Bremszuspanneinrichtung nach einem der vorhergehenden Ansprüche, **dadurch gekennzeichnet, daß** die Meßaufnehmersignal-Auswerteelektronik (64) in den Bolzenkopf (66) rüttel- und stoßfest eingegossen ist.

11. Elektromechanische Bremszuspanneinrichtung nach Anspruch 10, **dadurch gekennzeichnet, daß** redundante Meßaufnehmer (60) und/oder redundante Meßaufnehmersignal-Auswerteelektroniken (64), insbesondere redundante Meßaufnehmer mit unterschiedlichen Meßprinzipien und/oder redundante Meßaufnehmersignal-Auswerteelektroniken unterschiedlichen Aufbaus und Art vorgesehen sind.

12. Elektromechanische Bremszuspanneinrichtung nach Anspruch 11, **dadurch gekennzeichnet, daß** durch den Meßaufnehmer (60) Ist-Werte für die momentane Bremskraft als Signale an eine Regelungseinrichtung lieferbar sind.

13. Elektromechanische Bremszuspanneinrichtung nach einem der vorhergehenden Ansprüche, **dadurch gekennzeichnet, daß** der Bremsaktuator (2) einen Elektromotor (4) beinhaltet, dessen Motorstrom durch einen Stromsensor erfaßbar ist.

14. Elektromechanische Bremszuspanneinrichtung nach Anspruch 13, **dadurch gekennzeichnet, daß** das Signal für den Motorstrom mit dem Signal für die Bremskraft abgleichbar ist.

## Claims

1. Electromechanical brake application device (1), in particular for a rail vehicle brake, comprising a brake actuator (2) for the application and/or release of the brake and a force converter (8) for converting the energy released by the brake actuator (2) into a brake application movement, wherein the force converter (8) contains a shear force measuring screw (58) arranged in the force flow and provided with at least one measuring sensor for indirect or direct braking force measurement, **characterised in that** measuring sensor signal evaluation electronics (64) are arranged in an end screw head (66), which is enlarged in diameter, of the shear force measuring screw (58).

2. Electromechanical brake application device according to claim 1, **characterised in that** the shear force measuring screw (58) forms a hinge pin (32) of a joint (40) connecting at least two force transmission elements (20, 36) of the force converter (8) to one another.

3. Electromechanical brake application device according to claim 2, **characterised in that** the joint (40) connects a connecting rod (20), which can be linearly actuated by the brake actuator, to a brake lever (36) of an eccentric arrangement acting on brake linings (12).

4. Electromechanical brake application device according to claim 3, **characterised in that** the shear force measuring screw (58) penetrates a connecting rod head (28) of the connecting rod (20) as well as through-holes (34), which are coaxial to this, of cheeks (38) of the brake lever (36) axially encompassing the connecting rod head (28).

5. Electromechanical brake application device according to claim 4, **characterised in that** the brake lever (36) acts on an eccentric arrangement with an eccentric shaft (46) which is articulated to at least one forked lever (48), which together with a further forked lever (50) forms a brake calliper (52), lining holders with brake linings (12), which are displaceable in the direction of an axis of a brake disc (14), being arranged at the ends of the forked levers (48, 50).

6. Electromechanical brake application device according to any one of the preceding claims, **characterised in that** the measuring sensor contains at least one strain guage (60) held at the periphery of the shear force measuring screw (58) for indirect or direct braking force measurement.

7. Electromechanical brake application device according to any one of the preceding claims, **characterised in that** the measuring sensor contains at least one strain guage (60) held in a hollow hole of a thin-walled shear force measuring screw for indirect or direct braking force measurement.

8. Electromechanical brake application device according to any one of the preceding claims, **characterised in that** provided at the periphery of the shear force measuring screw (58) are recesses (62) for receiving the strain guages (60), which are located in the region of axial impact planes of the connecting rod head (28) with the cheeks (38) of the brake lever (36),

9. Electromechanical brake application device according to any one of the preceding claims, **characterised in that** the measuring sensor (60) contains at least one pressure measurement converter integrated in the shear force measuring screw (58), preferably a pressure measurement converter operating according to a capacitive, piezoelectric or piezoresistive principle, for indirect or direct braking force measurement.

10. Electromechanical brake application device according to any one of the preceding claims, **characterised in that** the measuring sensor signal evaluation electronics (64) are sealed in a shakeproof and shockproof manner in the screw head (66).

11. Electromechanical brake application device according to claim 10, **characterised in that** redundant measuring sensors (60) and/or redundant measuring sensor signal evaluation electronics (64), in particular redundant measuring sensors with different measuring principles and/or redundant measuring sensor signal evaluation electronics of different construction and type are provided.

12. Electromechanical brake application device according to claim 11, **characterised in that** actual values for the instantaneous braking force can be supplied as signals to a regulation device by the measuring sensor (60).

13. Electromechanical brake application device according to any one of the preceding claims, **characterised in that** the brake actuator (2) contains an electric motor (4), the motor current of which can be detected by a current sensor.

14. Electromechanical brake application device according to claim 13, **characterised in that** the signal for the motor current can be balanced with the signal for the braking force.

## Revendications

1. Dispositif (1) électromécanique de serrage de frein, notamment pour frein de véhicule automobile sur rail, comprenant un actionneur (2) de frein pour serrer et/ou desserrer le frein et un convertisseur (8) de force pour convertir l'énergie cédée par l'actionneur (2) de frein en un mouvement de serrage de frein, le convertisseur (8) de force comprenant un axe (58) de mesure de force de cisaillement, disposé dans le flux de force et muni d'au moins un enregistreur de mesure pour mesurer directement ou indirectement la force de freinage, **caractérisé en ce qu'**une électronique (64) d'exploitation du signal de l'enregistreur de mesure est disposée dans une tête (66) de l'axe (58) de mesure de la force de cisaillement, tête qui se trouve du côté de l'extrémité et qui a un diamètre agrandi.

2. Dispositif électromécanique de serrage de frein suivant la revendication 1, **caractérisé en ce que** l'axe (58) de mesure de la force de cisaillement forme un axe (32) d'articulation d'au moins une articulation (40) reliant, entre eux, au moins deux éléments (20, 36) de transmission de force du convertisseur (8) de force.

3. Dispositif électromécanique de serrage de frein suivant la revendication 2, **caractérisé en ce que** l'articulation (40) relie une bielle (29) qui peut être actionnée linéairement par l'actionneur (2) de frein à un levier (36) de frein d'un dispositif excentrique agissant sur des garnitures (12) de frein.

4. Dispositif électromécanique de serrage de frein suivant la revendication 3, **caractérisé en ce que** l'axe (58) de mesure de la force de cisaillement passe à travers une tête (28) de la bielle (20), ainsi que dans des trous (34) traversant qui en sont coaxiaux, deux jougs (38), entourant axialement la tête (28) de bielle, du levier (36) de frein.

5. Dispositif électromécanique de serrage de frein suivant la revendication 4, **caractérisé en ce que** le levier (36) de frein agit sur un dispositif excentrique ayant un arbre (46) excentrique qui est articulé à au moins un levier (48) de pince, lequel forme, ensemble avec un autre levier (50) de pince, une pince (52) de frein, des porte-garnitures ayant des garnitures (12) de frein, qui sont montées coulissantes dans la direction d'un axe d'un disque (14) de frein, étant disposés aux extrémités des leviers (48, 50) de pince.

6. Dispositif électromécanique de serrage de frein suivant l'une des revendications précédentes, **caractérisé en ce que** l'enregistreur de mesure comporte, pour la mesure directe ou indirecte de la force de freinage, au moins un extensomètre (60) à fil, maintenu sur le pourtour de l'axe (58) de mesure de la force de cisaillement.

7. Dispositif électromécanique de serrage de frein suivant l'une des revendications précédentes, **caractérisé en ce que** l'enregistreur de mesure comporte, pour la mesure directe ou indirecte de la force de freinage, au moins un extensomètre (60) à fil, maintenu dans une cavité d'un axe à paroi mince de mesure de la force de cisaillement.

8. Dispositif électromécanique de serrage de frein suivant l'une des revendications précédentes, **caractérisé en ce que**, sur le pourtour de l'axe (58) de mesure de la force de cisaillement, sont prévus des évidements (62) de réception des extensomètres (60) à fil, qui se trouvent dans la zone de plans axiaux de butée de la tête (28) de bielle avec les joues (38) du levier (36) de frein.

9. Dispositif électromécanique de serrage de frein suivant l'une des revendications précédentes, **caractérisé en ce que** l'enregistreur (60) de mesure comporte, pour la mesure directe ou indirecte de la force de freinage, au moins un transducteur de mesure de pression intégré à l'axe (58) de mesure de la force de cisaillement, de préférence à un transducteur de mesure de pression fonctionnant suivant un principe capacitif, piézoélectrique ou piézorésistif.

10. Dispositif électromécanique de serrage de frein suivant l'une des revendications précédentes, **caractérisé en ce que** l'électronique (64) d'exploitation du signal de l'enregistreur de mesure est coulé, à l'épreuve des vibrations et des chocs, dans la tête (66) de l'axe.

11. Dispositif électromécanique de serrage de frein suivant la revendication 10, **caractérisé en ce qu'**il est prévu des enregistreurs (60) redondants de mesure et/ou des électroniques (64) redondantes d'exploitation du signal de l'enregistreur de mesure, notamment des enregistreurs redondants de mesure ayant des principes de mesure différents et/ou des électroniques redondantes d'exploitation du signal d'enregistreurs de mesure de structures et de types différents.

12. Dispositif électromécanique de serrage de frein suivant la revendication 11, **caractérisé en ce qu'**il peut être fourni par l'enregistreur (60) de mesure à un dispositif de régulation des valeurs réelles de la force de freinage instantanée sous la forme de signaux.

13. Dispositif électromécanique de serrage de frein suivant l'une des revendications précédentes, **caractérisé en ce que** l'actionneur (2) de frein comporte un moteur (4) électrique dont le courant peut être relevé par un capteur de courant.

14. Dispositif électromécanique de serrage de frein suivant la revendication 13, **caractérisé en ce que** le signal pour le courant du moteur peut être égalisé au signal pour la force de freinage.
